# EUROPÄISCHE PATENTSCHRIFT

(11) **EP 1 769 970 B1**
(45) Veröffentlichungstag und Bekanntmachung des Hinweises auf die Patenterteilung: **09.01.2008**
(21) Anmeldenummer: 05020584.8
(22) Anmeldetag: 21.09.2005
(51) Int. Cl.: B60R 11/00

(54) **Befestigungssystem**
Attachment system
Système de fixation

(43) Veröffentlichungstag der Anmeldung: 04.04.2007
(73) Patentinhaber: Delphi Technologies, Inc., Troy, MI 48007 (US)
(72) Erfinder: Guthke, Detlev, 58089 Hagen (DE); Maiwald, Helmut, 51515 Kürten (DE); Tessarek, Artur, 44797 Bochum (DE); Kleipödssus, Ingo, 42549 Velbert (DE)
(74) Vertreter: Manitz, Finsterwald & Partner GbR

(56) Entgegenhaltungen:
- DE-A1- 2 435 803
- FR-A- 1 342 726
- US-A- 2 521 271
- US-A- 2 852 829
- US-A- 5 950 973
- PATENT ABSTRACTS OF JAPAN Bd. 1998, Nr. 14, 31. Dezember 1998 (1998-12-31) & JP 10 243835 A (KONDO SEISAKUSHO:KK), 14. September 1998 (1998-09-14)
- PATENT ABSTRACTS OF JAPAN Bd. 018, Nr. 177 (M-1582), 25. März 1994 (1994-03-25) & JP 05 338512 A (NISSAN MOTOR CO LTD), 21. Dezember 1993 (1993-12-21)

## Beschreibung

Die Erfindung betrifft ein Befestigungssystem, insbesondere zur Befestigung von Bauteilen an Kraftfahrzeugen, mit einem Träger und einem lösbar am Träger anbringbaren Halter, gemäß dem Oberbegriff des Anspruchs 1.

In der industriellen Fertigung, insbesondere im Automobilbau, stellt sich häufig die Aufgabe, ein Bauteil an einem anderen Bauteil oder einem Träger lösbar zu befestigen. Die Montage und Demontage soll auf einfache Weise möglichst ohne Zuhilfenahme von Werkzeugen erfolgen. Zur Lösung dieser Aufgabe werden häufig Befestigungssysteme eingesetzt, die auf dem Prinzip des Bajonettverschlusses beruhen. Hierbei werden im Allgemeinen die zu verbindenden Bauteile durch eine Schiebebewegung in eine noch nicht kraftschlüssige Position gebracht. Anschließend werden die beiden Bauteile durch eine weitere Bewegung, beispielsweise eine Drehbewegung, in Eingriff gebracht. Auch bekannt (DE 2 435 803 A1) sind ohne Hilfsmittel in Öffnungen einsehbare, im wesentlichen C-Förmige Beschläge für Spannbänder.

Aufgabe der vorliegenden Erfindung ist es, ein Befestigungssystem zu schaffen, das kostengünstig herstellbar ist und bei einfacher Montierbarkeit eine zuverlässige Verbindung gewährleistet. Das Befestigungssystem soll insbesondere im Automobilbau und dort insbesondere zur Befestigung von Airbagmodulen einsetzbar sein.

Die Aufgabe der Erfindung wird durch ein Befestigungssystem gemäß Anspruch 1 und insbesondere dadurch gelöst, dass das Befestigungssystem einen Träger und einen lösbar am Träger anbringbaren Halter umfasst, wobei im Träger eine Öffnung für den Halter vorgesehen ist, der Halter in einer Montagestellung den Träger im Bereich der Öffnung mit mehreren voneinander beabstandeten Abschnitten abwechselnd von der einen und der anderen Seite hintergreift, und ein Abschnitt des Halters als Sicherungsabschnitt ausgebildet ist, der zur Vollendung der Montagestellung durch eine abschließende Bewegung des Halters relativ zum Träger lösbar mit dem Träger in Eingriff bringbar ist, wobei der Halter drei voneinander beabstandete Abschnitte aufweist, wobei ein mittlerer Ankerabschnitt zwischen dem Sicherungsabschnitt und einem zur Befestigung eines Bauteils am Träger dienenden Montageabschnitt angeordnet ist.

Bei einem Befestigungssystem der genannten Art ist durch eine Trennung von kraftaufnehmenden Abschnitten des Halters und einem sichernden Abschnitt gewährleistet, dass der Halter auch dann noch funktionsfähig bleibt, wenn der als Sicherungsabschnitt ausgebildete Abschnitt des Halters noch nicht oder nicht mehr mit dem Träger in Eingriff steht. Hierdurch ist eine zuverlässigere Verbindung zwischen Träger und Halter gegeben als bei Befestigungssystemen nach dem herkömmlichen Bajonettprinzip.

Durch den an der Vorderseite des Trägers anliegenden Montageabschnitt und den an der Rückseite anliegenden Ankerabschnitt wird ein Eingriff zwischen Halter und Träger hergestellt, während der Sicherungsabschnitt den Halter in der Montageposition gegenüber dem Träger arretiert. Darüber hinaus ist der Montageabschnitt derart ausgebildet, dass mit ihm ein am Träger festzulegendes Bauteil oder Modul verbunden werden kann.

In einer bevorzugten Ausführungsform eines erfindungsgemäßen Befestigungssystems ist die Öffnung im Träger von lang gestreckter Form und insbesondere zumindest näherungsweise rechteckig. Dies erlaubt eine ausreichende Dimensionierung eines Abschnitts des Halters, der zur Montage in einer bestimmten Ausrichtung durch diese Öffnung hindurch führbar sein muss, in einer weiteren Ausrichtung aber mit dem Träger in Eingriff stehen muss. Eine rechteckige Form ist hierbei insofern gegenüber anderen lang gestreckten Formen vorteilhaft, als dass sie sich beispielsweise durch Stanzen mittels relativ einfach ausgebildeter Werkzeuge im Träger herstellen lässt und aufgrund ihrer Kontur eine zuverlässige, gegen unbeabsichtigtes Verdrehen gesicherte Arretierung des Halters im Träger erlaubt.

Bevorzugt sind die Abschnitte am Halter entlang einer Längsachse angeordnet, die insbesondere parallel zu einer Längsachse der Öffnung verläuft.

Vorteilhafterweise ist die Breite des Ankerabschnitts größer als die kürzeste Breite der Öffnung und kleiner als die längste Weite der Öffnung. Da der Ankerabschnitt den Träger der Montageposition hintergreifen soll, muss die Öffnung so ausgebildet sein, dass der Ankerabschnitt bei einer gegenüber diesen Positionen verdrehten Lage des Halters durch den Träger hindurch geführt werden kann.

In einer weiteren vorteilhaften Ausführungsform ist der Montageabschnitt als eine in der Montagestellung insbesondere senkrecht vom Träger abstehende Montageplattform ausgebildet. Diese Ausführungsform erlaubt einen relativ universellen Einsatz des Halters, da hierdurch eine weitere Befestigung von Bauteilen oder Modulen an dem Montageabschnitt bzw. der Montageplattform erleichtert wird. Hierzu kann die Montageplattform mit zusätzlichen Ausnehmungen versehen sein.

Weiterhin bevorzugt ist, wenn der Halter als Winkelelement ausgebildet ist, wobei von einem plattenförmigen Montageabschnitt in einem Winkel von bevorzugt etwa 90° ein streifenförmiger Grundabschnitt absteht, dessen freier Endbereich als gekrümmt verlaufender und/oder abgewinkelter Sicherungsabschnitt ausgebildet und der zwischen dem Montageabschnitt und dem Sicherungsabschnitt zur Bildung eines Ankerabschnitts mit einer Verbreiterung versehen ist.

Vorteilhafterweise kann der Halter in der Montagestellung durch zumindest an einem Abschnitt ausgebildete federnde Unterabschnitte spielfrei mit dem Träger verspannt sein. Derartige Unterabschnitte verhindern, dass in der Montagestellung noch ein Spiel zwischen Träger und Halter besteht, das beispielsweise Klappergeräusche oder eine mangelnde Festigkeit der Verbindung zur Folge haben könnte.

Besonders bevorzugt sind die Unterabschnitte als von einem Montageabschnitt, beispielsweise einer Montageplattform, abstehende Federlaschen ausgebildet. Die beispielsweise durch Stanzen und Abbiegen geschaffenen Federlaschen erübrigen im Sinne einer einfachen, kostengünstigen Fertigung das Vorsehen weiterer Bauelemente, um einen spielfreien Sitz des Halters zu erreichen.

Besonders vorteilhaft ist es, wenn der Halter mit zumindest einem Abschnitt durch die Öffnung hindurch führbar und durch eine Verriegelungsbewegung relativ zum Träger mit dem Träger in eine Vormontagestellung bringbar ist, in welcher der Halter unverlierbar am Träger gehalten ist, wobei die Verriegelungsbewegung eine Drehbewegung umfasst, bevorzugt um nicht mehr als 90° und besonders bevorzugt um nicht mehr als 60°. Durch die Verriegelungsbewegung wird erreicht, dass der durch die Öffnung hindurch geführte Abschnitt, insbesondere der Ankerabschnitt, anschließend mit dem Träger in Eingriff gebracht wird. Der notwendige Winkel der Drehbewegung ergibt sich hierbei insbesondere aus den Abmessungen des Halters und der im Träger angebrachten Öffnung.

Weiterhin vorteilhaft ist es, wenn der Sicherungsabschnitt zur Herstellung der Montagestellung durch eine von der Vormontagestellung ausgehende Kippbewegung des Halters um eine Kippachse mit dem Träger in Eingriff bringbar ist. In der Vormontagestellung befinden sich beispielsweise der Ankerabschnitt und der Montageabschnitt bereits mit dem Träger in Eingriff. Durch die weitere, einfach durchzuführende Kippbewegung wird dann zusätzlich ein Eingreifen des Sicherungsabschnitts in den Träger bewirkt.

In einer bevorzugten Ausführungsform liegt die Kippachse in einer durch die Öffnung definierten Ebene. Insbesondere verläuft die Kippachse senkrecht zu einer Geraden auf der die Abschnitte des Halters liegen. Am Ende der Kippbewegung kann dann der Sicherungsabschnitt mit dem Träger verrastet werden. Durch die Verrastung ist es möglich, eine sichere Verbindung des Halters mit dem Träger auf einfache Weise wieder zu lösen.

Besonders bevorzugt ist es, wenn der Sicherungsabschnitt auf einer Seite der Kippachse liegt und der Halter durch Belasten eines auf der anderen Seite der Kippachse liegenden, insbesondere als Montageabschnitt ausgebildeten Abschnitts kippbar ist. Bei einer derartigen Ausführung ist eine besonders einfache Montage möglich, da während der gesamten Montage der Halter nur beispielsweise an seinem Montageabschnitt gehalten werden muss. Ein Umgreifen, etwa um die Montagestellung zu vollenden, ist bei einer solchen Ausführung nicht zwingend notwendig. Dadurch lässt sich der Aufwand sowohl für eine manuelle als auch eine automatische Montage niedrig halten.

Weiterhin vorteilhaft ist es, wenn der Halter ein einstückiges Stanzbiegeteil ist. Derartige Stanzbiegeteile lassen sich sehr kostengünstig fertigen und erfüllen alle Ansprüche, die an ein erfindungsgemäßes Befestigungssystem gestellt werden.

Die der Erfindung zu Grunde liegende Aufgabe wird ferner dadurch gelöst, dass ein Halter mit mehreren voneinander beabstandeten Eingriffsabschnitten, die eine insbesondere plattenförmige Montageabschnitt, einen Ankerabschnitt und einen Sicherungsabschnitt umfassen, vorgesehen ist, wobei der Sicherungsabschnitt im freien Endbereich eines in einem Winkel von bevorzugt etwa 90° vom Montageabschnitt abstehenden streifenförmigen Grundabschnitts bildet, der zwischen dem Montageabschnitt und dem Sicherungsabschnitt zur Bildung des Ankerabschnitts mit einer Verbreiterung versehen ist.

Weitere vorteilhafte Ausführungsformen der Erfindung sind den abhängigen Ansprüchen, der Beschreibung sowie den Zeichnungen zu entnehmen.

Die Erfindung wird nachfolgend anhand eines Ausführungsbeispiels unter Bezugnahme auf die Zeichnungen erläutert; in diesen zeigt:
- Fig. 1: eine perspektivische Ansicht eines zu einem erfindungsgemäßen Befestigungssystem gehörenden Halters,
- Fig. 2: eine seitliche Schnittansicht des Befestigungssystems,
- Fig. 3: eine halbtransparente Frontansicht des Befestigungssystems von Fig. 2,
- Fig. 4: eine halbtransparente Rückansicht des Befestigungssystems von Fig. 2, und
- Fig. 5 a-d: die Montageabfolge des Befestigungssystems von Fig. 3 und 4 in perspektivischer Ansicht.

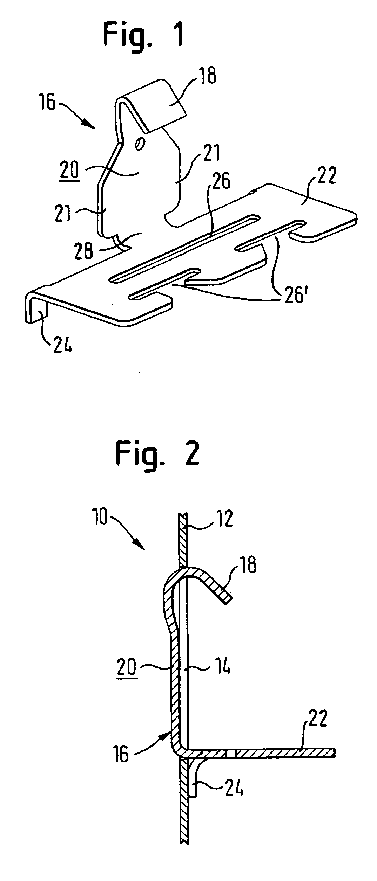

Gemäß Fig. 1 weist ein Halter 16 eines erfindungsgemäßen Befestigungssystems 10 (Fig. 2) eine rechteckige Montageplattform 22 auf, in die Ausnehmungen 26, 26' eingebracht sind, die zur Aufnahme oder Befestigung von weiteren Bauteilen oder Modulen, wie beispielsweise eines Airbag-Moduls, geeignet sind. Es sei angemerkt, dass auch in Form und Anzahl von dem hier dargestellten Beispiel abweichende Ausnehmungen in die Montageplattform 22 eingebracht werden können. An zwei längsseitigen Ecken der Montageplattform 22 ist jeweils eine Federlasche 24 ausgebildet, die sich jeweils senkrecht nach unten zur durch die Montageplattform 22 definierten Ebene erstreckt.

An der mit Federlaschen 24 versehenen Längsseite der Montageplattform 22 schließt sich ein Ankerabschnitt 20 an die Montageplattform 22 an und bildet mit dieser einen rechten Winkel, wobei sich der Ankerabschnitt 20 in eine den Federlaschen 24 entgegengesetzte Richtung erstreckt und zwei flügelförmige Verbreiterungen 21 aufweist. Der Ankerabschnitt 20 ist mit der Montageplattform 22 über einen bogenförmigen Unterabschnitt 28 verbunden, wobei die Breite des bogenförmigen Unterabschnitts 28 geringer ist als die Breite der Montageplattform 22 und insbesondere auch geringer ist als die Breite des Ankerabschnitts 20. An den Ankerabschnitt 20 schließt sich auf der der Montageplattform 22 gegenüberliegenden Seite ein Sicherungsabschnitt 18 an, der an seinem offenen Ende kreissektorförmig in Richtung der Montageplattform 22 gebogen ist.

Fig. 2 stellt das Befestigungssystem 10 in der Montagestellung dar, wobei sich der Halter 16 vollständig durch eine in einem Träger 12 angeordnete rechteckige Öffnung 14 hindurch mit dem Träger 12 in Eingriff befindet, der im Bereich der Öffnung 14 annähernd eben ist. Die Montageplattform 22 befindet sich auf der rechten Seite des Trägers 12 und stützt sich mit den nach unten weisenden Federlaschen 24 an diesem ab. Die mit den Federlaschen 24 versehene Längsseite der Montageplattform 22 stellt ungefähr die Kippachse für eine zur Vollendung der Montagestellung notwendige Kippbewegung dar, die durch eine nach unten gerichtete Kraftausübung bevorzugt auf das freie Ende der Montageplattform 22 veranlasst werden kann.

Der bogenförmige Unterabschnitt 28 erstreckt sich in einem unteren Bereich der Öffnung 14 durch diese hindurch. Der auf den bogenförmigen Unterabschnitt 28 folgende Ankerabschnitt 20 stützt sich mit seinen Verbreiterungen 21 an der linken Seite des Trägers 12 ab.

Der an den Ankerabschnitt 20 anschließende Sicherungsabschnitt 18 erstreckt sich im Bereich seiner Biegung durch einen oberen Bereich der Öffnung 14 hindurch. Da der äußere Scheitelpunkt des Sicherungsabschnitts 18 ein wenig höher als die Oberkante der Öffnung 14 liegt, wird eine Bewegung des Sicherungsabschnitts 18 zurück auf die linke Seite des Trägers gehemmt, so dass der Sicherungsabschnitt 18 in dieser Montagestellung mit dem Träger 12 verrastet ist. Weiterhin verhindert der Sicherungsabschnitt 18 in dieser Position eine Drehung des Halters 16 um eine zur Hauptebene des Trägers 12 senkrechte Achse. Eine Entrastung des Sicherungsabschnitts 18 ist nur durch das Ausüben einer nach links gerichteten Kraft auf diesen oder gegebenenfalls durch eine nach oben gerichtete Kraftausübung bevorzugt auf das freie Ende der Montageplattform 22 möglich.

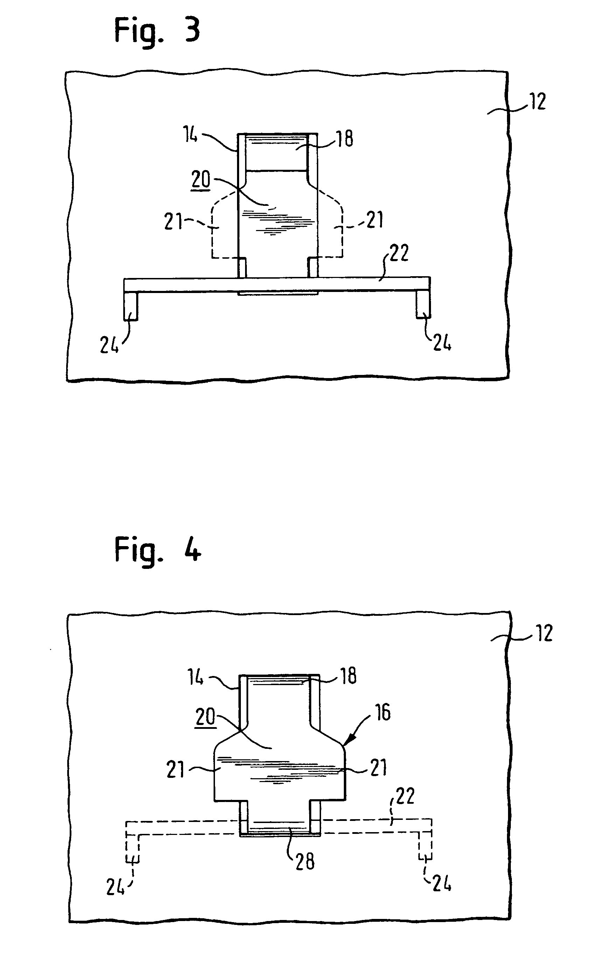

In Fig. 3, die die Vorderseite des Befestigungssystems 10 darstellt, ist zu erkennen, wie sich die Montageplattform 22 mittels der Federlaschen 24 am halbtransparent dargestellten Träger 12 abstützt, während der Ankerabschnitt 20, der mit seinen gestrichelt dargestellten Verbreiterungen 21 den Träger 12 hintergreift und sich somit an seiner Rückseite abstützt. Es ist zu erkennen, dass sich der Sicherungsabschnitt 18 oberhalb des Ankerabschnitts 20 wieder durch die Öffnung 14 hindurch erstreckt und mit dem Träger 12 nun wieder auf der Vorderseite in Eingriff steht.

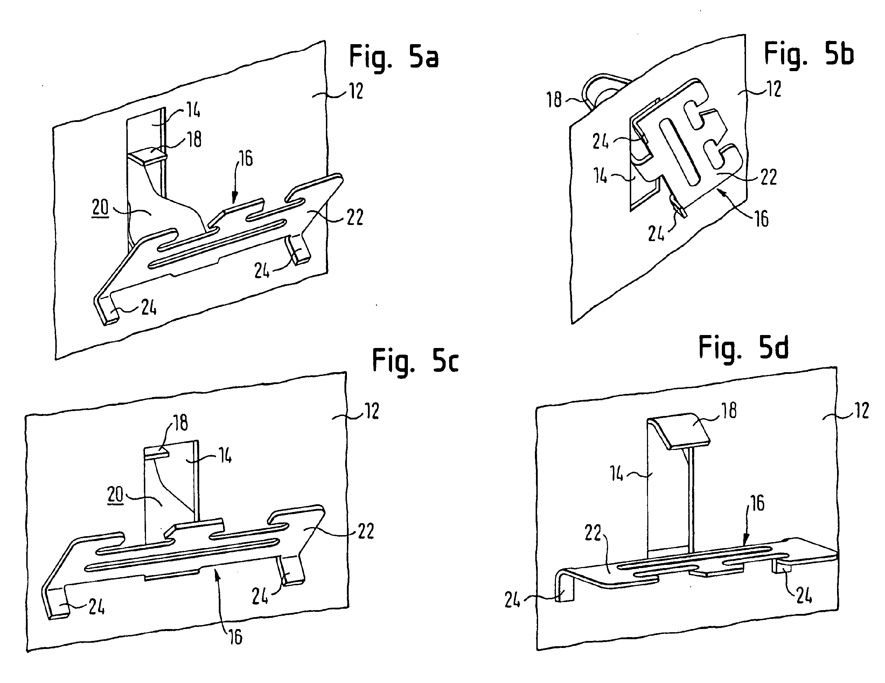

Fig. 4 zeigt das Befestigungssystem 10 von der Rückseite. Hier ist insbesondere zu erkennen, dass die Breite des Ankerabschnitts 20 einschließlich seiner Verbreiterungen 21 größer als die kurze Weite der Öffnung 14 im hier ebenfalls halbtransparent dargestellten Träger 12 ist, während die Breite des Sicherungsabschnitts 18 und des bogenförmigen Unterabschnitts 28 geringfügig kleiner ist als die kurze Weite der Öffnung 14. Weiterhin ist zu erkennen, dass die Breite des Ankerabschnitts 20 kleiner ist als die lange Weite der Öffnung 14. Wie in Fig. 5b zu erkennen ist, wird dadurch bei einer gegenüber der Fig. 3 und 4 verkippten und verdrehten Lage des Halters 16 das Hindurchführen des Ankerabschnitts 20 durch die Öffnung 14 im Träger 12 hindurch ermöglicht.

Die Fig. 5a - d zeigen die Abfolge der Montage des Halters 16 an einen Träger 12. Gemäß Fig. 5a wird zunächst der Sicherungsabschnitt 18 durch die Öffnung 14 hindurch geführt. Dazu befindet sich der Halter 16 in einer gegenüber der endgültigen Montageposition gekippten Lage. Wie in Fig. 5b dargestellt, wird dann der Halter 16 um seine Längsachse um etwa 60-90° gedreht, damit auch der Ankerabschnitt 20 samt seinen Verbreiterungen 21 durch die Öffnung 14 hindurch geführt werden kann. Nach dem Durchführen des Ankerabschnitts 20 wird der Halter 16 um den Winkelbetrag der vorhergehenden Drehung gemäß Fig. 5c zurückgedreht. Wie Fig. 5d zeigt, wird der Halter 16 dann durch eine Kippbewegung um die dem Träger 12 zugewandte und mit Federlaschen 24 versehene Längsseite der Montageplattform 22 in die endgültige Montagestellung bewegt. Dabei durchdringt wiederum der Sicherungsabschnitt 18 teilweise die Öffnung 14 in ihrem oberen Bereich und gelangt dort mit dem Träger 12 in Verrastung.

Der Halter 16 ist zur Aufnahme von Zugkräften geeignet, die eine nach unten gerichtete, parallel zum Ankerabschnitt 20 verlaufende Komponente aufweisen, und eignet sich daher mit seiner Montageplattform 22 als Abstützung für jedwede Art von am Träger 12 anzubringenden Bauteilen. Besonders vorteilhaft ist er zum Halten von Airbagmodulen im Kraftfahrzeugbau geeignet.

### Bezugszeichenliste

- 10: Befestigungssystem
- 12: Träger
- 14: Öffnung
- 16: Halter
- 18: Sicherungsabschnitt
- 20: Ankerabschnitt
- 21: Verbreiterung
- 22: Montageplattform
- 24: Federlasche
- 26, 26': Ausnehmung
- 28: bogenförmiger Unterabschnitt

## Patentansprüche

1. Befestigungssystem, insbesondere zur Befestigung von Bauteilen an Kraftfahrzeugen, mit einem Träger (12) und einem lösbar am Träger (12) anbringbaren Halter (16), wobei
im Träger (12) eine Öffnung (14) für den Halter (16) vorgesehen ist, der Halter (16) in einer Montagestellung den Träger (12) im Bereich der Öffnung (14) mit mehreren voneinander beabstandeten Abschnitten (18, 20, 22) abwechselnd von der einen und der anderen Seite hintergreift, und
ein Abschnitt des Halters (16) als Sicherungsabschnitt (18) ausgebildet ist, der zur Vollendung der Montagestellung durch eine abschließende Bewegung des Halters (16) relativ zum Träger (12) lösbar mit dem Träger (12) in Eingriff bringbar ist,
**dadurch gekennzeichnet ,**
**dass** der Halter (16) drei voneinander beabstandete Abschnitte (18, 20, 22) aufweist, wobei ein mittlerer Ankerabschnitt (20) zwischen dem Sicherungsabschnitt (18) und einem zur Befestigung eines Bauteils am Träger (12) dienenden Montageabschnitt (22) angeordnet ist.

2. Befestigungssystem nach Anspruch 1,
**dadurch gekennzeichnet ,**
**dass** die Öffnung (14) von lang gestreckter Form und insbesondere zumindest näherungsweise rechteckig ist.

3. Befestigungssystem nach Anspruch 1 oder 2,
**dadurch gekennzeichnet ,**
**dass** die Abschnitte (18, 20, 22) entlang einer Längsachse angeordnet sind, die insbesondere parallel zu einer Längsachse der Öffnung (14) verläuft.

4. Befestigungssystem nach einen der Ansprüche 1 bis 3,
**dadurch gekennzeichnet ,**
**dass** die Breite des Ankerabschnitts (20) größer als die kürzeste Weite der Öffnung (14) und kleiner als die längste Weite der Öffnung (14) ist.

5. Befestigungssystem nach einem der vorhergehenden Ansprüche,
**dadurch gekennzeichnet ,**
**dass** ein Montageabschnitt als eine in der Montagestellung insbesondere senkrecht vom Träger (12) abstehende Montageplattform (22) ausgebildet ist.

6. Befestigungssystem nach einem der vorhergehenden Ansprüche,
**dadurch gekennzeichnet ,**
**dass** der Halter (16) als Winkelelement ausgebildet ist, wobei von einem plattenförmigen Montageabschnitt (22) in einem Winkel von bevorzugt etwa 90° ein streifenförmiger Grundabschnitt absteht, dessen freier Endbereich als gekrümmt verlaufender und/oder abgewinkelter Sicherungsabschnitt (18) ausgebildet und der zwischen dem Montageabschnitt (22) und dem Sicherungsabschnitt (18) zur Bildung eines Ankerabschnitts (20) mit einer Verbreiterung (21) versehen ist.

7. Befestigungssystem nach einem der vorhergehenden Ansprüche,
**dadurch gekennzeichnet ,**
**dass** der Halter (16) in der Montagestellung durch zumindest an einem Abschnitt (22) ausgebildete federnde Unterabschnitte (24) spielfrei mit dem Träger (12) verspannt ist.

8. Befestigungssystem nach Anspruch 7,
**dadurch gekennzeichnet ,**
**dass** die Unterabschnitte als von einem Montageabschnitt (22) abstehende Federlaschen (24) ausgebildet sind.

9. Befestigungssystem nach einem der vorhergehenden Ansprüche,
**dadurch gekennzeichnet ,**
**dass** der Halter (16) mit zumindest einem Abschnitt durch die Öffnung (14) hindurch führbar und durch eine Verriegelungsbewegung relativ zum Träger (12) mit dem Träger (12) in eine Vormontagestellung bringbar ist, in welcher der Halter (16) unverlierbar am Träger (12) gehalten ist, wobei die Verriegelungsbewegung eine Drehbewegung umfasst, bevorzugt um nicht mehr als 90° und besonders bevorzugt um nicht mehr als 60°.

10. Befestigungssystem nach einem der vorhergehenden Ansprüche,
**dadurch gekennzeichnet ,**
**dass** der Sicherungsabschnitt (18) zur Herstellung der Montagestellung durch eine von einer Vormontagestellung ausgehende Kippbewegung des Halters (16) um eine Kippachse mit dem Träger (12) in Eingriff bringbar ist.

11. Befestigungssystem nach Anspruch 10,
**dadurch gekennzeichnet ,**
**dass** die Kippachse in einer durch die Öffnung (14) definierten Ebene liegt.

12. Befestigungssystem nach Anspruch 10 oder 11,
**dadurch gekennzeichnet ,**
**dass** die Kippachse senkrecht zu einer Geraden verläuft, auf der die Abschnitte des Halters (16) liegen.

13. Befestigungssystem nach einem der Ansprüche 10 bis 12,
**dadurch gekennzeichnet ,**
**dass** der Sicherungsabschnitt (18) am Ende der Kippbewegung mit dem Träger (12) verrastbar ist.

14. Befestigungssystem nach einem der Ansprüche 10 bis 13,
**dadurch gekennzeichnet ,**
**dass** der Sicherungsabschnitt (18) auf einer Seite der Kippachse liegt und der Halter (16) durch Belasten eines auf der anderen Seite der Kippachse liegenden, insbesondere als Montageabschnitt (22) ausgebildeten Abschnitts kippbar ist.

15. Befestigungssystem nach einem der vorhergehenden Ansprüche,
**dadurch gekennzeichnet ,**
**dass** der Halter (16) ein einstückiges Stanzbiegeteil ist.

16. Halter, insbesondere zur Befestigung von Bauteilen an Kraftfahrzeugen,
mit mehreren voneinander beabstandeten Eingriffsabschnitten, die einen insbesondere plattenförmigen Montageabschnitt (22), einen Ankerabschnitt (20) und einen Sicherungsabschnitt (18) umfassen, wobei der Sicherungsabschnitt (18) den freien Endbereich eines in einem Winkel von bevorzugt etwa 90° vom Montageabschnitt abstehenden, streifenförmigen Grundabschnitts bildet, der zwischen dem Montageabschnitt (22) und dem Sicherungsabschnitt (18) zur Bildung des Ankerabschnitts (20) mit einer Verbreiterung versehen ist.

17. Halter nach Anspruch 16,
**dadurch gekennzeichnet,**
**dass** am Halter (16) an zumindest einem Abschnitt federnde Unterabschnitte (24) ausgebildet sind.

18. Halter nach Anspruch 17,
**dadurch gekennzeichnet ,**
**dass** die Unterabschnitte als von dem Montageabschnitt (22) abstehende Federlaschen (24) ausgebildet sind.

19. Halter nach einem der Ansprüche 16 bis 18,
**dadurch gekennzeichnet ,**
**dass** der Sicherungsabschnitt (18) und der Montageabschnitt (22) auf der gleichen Seite einer durch den Ankerabschnitt (20) definierten Ebene liegen.

20. Halter nach einem der Ansprüche 16 bis 19,
**dadurch gekennzeichnet,**
**dass** der Halter (16) ein einstückiges Stanzbiegeteil ist.

## Claims

1. A fastening system, in particular for the fastening of components to motor vehicles, comprising a carrier (12) and a holder (16) releasably attachable to the carrier (12), wherein
an opening (14) for the holder (16) is provided in the carrier (12); a plurality of mutually spaced apart sections (18, 20, 22) of the holder (16) engage behind the carrier (12) in the region of the opening (14) alternately from the one side and from the other side in an installation position; and
a section of the holder (16) is made as a securing section (18) which can be releasably brought into engagement with the carrier (12) for the completion of the installation position by a concluding movement of the holder (16) relative to the carrier (12),
**characterized in that** the holder (16) has three mutually spaced apart sections (18, 20, 22), with a middle anchorage section (20) being arranged between the securing section (18) and an installation section (22) serving for the fastening of a component to the carrier (12).

2. A fastening system in accordance with claim 1, **characterized in that** the opening (14) is of elongated shape and is in particular at least approximately rectangular.

3. A fastening system in accordance with claim 1 or claim 2, **characterized in that** the sections (18, 20, 22) are arranged along a longitudinal axis which in particular extends parallel to a longitudinal axis of the opening (14).

4. A fastening system in accordance with any one of the claims 1 to 3, **characterized in that** the width of the anchorage section (20) is larger than the shortest width of the opening (14) and smaller than the longest width of the opening (14).

5. A fastening system in accordance with any one of the preceding claims, **characterized in that** an installation section is made as an installation platform (22) projecting, in particular perpendicularly, from the carrier (12) in the installation position.

6. A fastening system in accordance with any one of the preceding claims, **characterized in that** the holder (16) is made as an angular element, with a strip-shaped base section projecting from a plate-shaped installation section (22) at an angle of preferably approximately 90°, the free end of this base section being made as a securing section (18) extending in a curve and/or being angled and being provided with a widened portion (21) between the installation section (22) and the securing section (18) to form an anchorage section (20).

7. A fastening system in accordance with any one of the preceding claims, **characterized in that** the holder (16) is clamped to the carrier (12) in a clearance-free manner by resilient subsections 24 formed at at least one section (22) in the installation position.

8. A fastening system in accordance with claim 7, **characterized in that** the subsections are formed as spring tabs (24) projecting from an installation section (22).

9. A fastening system in accordance with any one of the preceding claims, **characterized in that** at least one section of the holder (16) is guidable through the opening (14) and is bringable with the carrier (12) into a pre-installation position by a latching movement relative to the carrier (12), in which pre-installation position the holder (16) is captively held at the carrier (12), with the latching movement comprising a rotary movement, preferably by no more than 90°, and particularly preferably by no more than 60°.

10. A fastening system in accordance with any one of the preceding claims, **characterized in that** the securing section (18) can be brought into engagement with the carrier (12) to establish the installation position by a tilting movement of the holder (16) around a tilt axis starting from a pre-installation position.

11. A fastening system in accordance with claim 10, **characterized in that** the tilt axis lies in a plane defined by the opening (14).

12. A fastening system in accordance with claim 10 or claim 11, **characterized in that** the tilt axis extends perpendicular to a straight line on which the sections of the holder (16) lie.

13. A fastening system in accordance with any one of the claims 10 to 12, **characterized in that** the securing section (18) is latchable to the carrier (12) at the end of the tilting movement.

14. A fastening system in accordance with any one of the claims 10 to 13, **characterized in that** the securing section (18) lies on one side of the tilt axis and the holder (16) is tiltable by loading a section disposed on the other side of the tilt axis, in particular made as an installation section (22).

15. A fastening system in accordance with any one of the preceding claims, **characterized in that** the holder (16) is a one-piece stamped bent part.

16. A holder, in particular for the fastening of components to motor vehicles, comprising a plurality of mutually spaced apart engagement sections which include an installation section (22), which is in particular of plate shape, an anchorage section (20) and a securing section (18), with the securing section (18) forming the free end region of a strip-shaped base section which projects at an angle of preferably approximately 90° from the installation section and which is provided with a widened portion between the installation section (22) and the securing section (18) to form the anchorage section (20).

17. A holder in accordance with claim 16, **characterized in that** resilient subsections (24) are formed at at least one section at the holder (16).

18. A holder in accordance with claim 17, **characterized in that** the subsections are made as spring tabs (24) projecting from the installation section (22).

19. A holder in accordance with any one of the claims 16 to 18, **characterized in that** the securing section (18) and the installation section (22) lie on the same side of a plane defined by the anchorage section (20).

20. A holder in accordance with any one of the claims 16 to 19, **characterized in that** the holder (16) is a one-piece stamped bent part.

## Revendications

1. Système de fixation, en particulier pour la fixation de composants dans des véhicules automobiles, comprenant un élément porteur (12) et une attache (16) pouvant être montée de façon démontable sur l'élément porteur (12), dans lequel
une ouverture (14) pour l'attache (16) est prévue dans l'élément porteur (12), où l'attache (16), se trouvant dans une position de montage, est en engagement avec l'élément porteur (12) au niveau de l'ouverture (14), alternativement d'un côté et de l'autre, par l'intermédiaire de plusieurs sections (18, 20, 22) espacées les unes des autres, et
une section de l'attache (16) est configurée en une section d'arrêt (18) qui, pour achever la mise en position de montage, peut être amenée en engagement avec l'élément porteur (12) de façon démontable grâce à un mouvement final relatif de l'attache (16) par rapport à l'élément porteur (12),
**caractérisé en ce que** l'attache (16) comprend trois sections (18, 20, 22) espacées les unes des autres, une section centrale d'ancrage (20) étant disposée entre la section d'arrêt (18) et une section de montage (22) servant à la fixation d'un composant sur l'élément porteur (12).

2. Système de fixation selon la revendication 1, **caractérisé en ce que** l'ouverture (14) présente une forme allongée et est notamment au moins à peu près rectangulaire.

3. Système de fixation selon la revendication 1 ou 2, **caractérisé en ce que** les sections (18, 20, 22) sont disposées le long d'un axe longitudinal qui s'étend notamment parallèlement à un axe longitudinal de l'ouverture (14).

4. Système de fixation selon l'une des revendications 1 à 3, **caractérisé en ce que** la largeur de la section d'ancrage (20) est plus grande que la plus petite dimension de l'ouverture (14), et plus petite que la plus grande dimension de l'ouverture (14).

5. Système de fixation selon l'une des revendications précédentes, **caractérisé en ce qu'**une section de montage est réalisée sous forme d'une plate-forme de montage (22) qui, en position de montage, se projette notamment perpendiculairement depuis l'élément porteur (12).

6. Système de fixation selon l'une des revendications précédentes, **caractérisé en ce que** l'attache (16) est réalisée sous forme d'un élément à angle, une section de base en forme de bande se projetant à un angle d'environ 90° de préférence depuis une section de montage (22) en forme de plateau, section de base dont la zone terminale libre est réalisée sous forme d'une section d'arrêt (18) s'étendant selon une courbure et/ou étant repliée, et qui est pourvue d'un élargissement (21) situé entre la section de montage (22) et la section d'arrêt (18) de manière à former une section d'ancrage (20).

7. Système de fixation selon l'une des revendications précédentes, **caractérisé en ce qu'**en position de montage, l'attache (16) est précontrainte sans jeu dans l'élément porteur (12) grâce à des sections inférieures (24) faisant ressort, conformées sur l'une au moins des sections (22).

8. Système de fixation selon la revendication 7, **caractérisé en ce que** les sections inférieures sont réalisées sous forme de languettes-ressorts (24) se projetant depuis une section de montage (22).

9. Système de fixation selon l'une des revendications précédentes, **caractérisé en ce que** l'attache (16) peut être engagée, par l'une au moins de ses sections, à travers l'ouverture (14), et peut être amenée, par un mouvement de verrouillage relatif à l'élément porteur (12), dans une position de pré-montage dans l'élément porteur (12), position dans laquelle l'attache (16) est maintenue de façon imperdable dans l'élément porteur (12), le mouvement de verrouillage comprenant un mouvement de rotation, de préférence une rotation ne dépassant pas 90° et, de façon particulièrement préférée, ne dépassant pas 60°.

10. Système de fixation selon l'une des revendications précédentes, **caractérisé en ce que**, pour établir la position de montage, la section d'arrêt (18) peut être amenée en engagement avec l'élément porteur (12) grâce à un mouvement de basculement de l'attache (16) autour d'un axe de basculement, en partant d'une position de pré-montage.

11. Système de fixation selon la revendication 10, **caractérisé en ce que** l'axe de basculement se situe dans un plan défini par l'ouverture (14).

12. Système de fixation selon la revendication 10 ou 11, **caractérisé en ce que** l'axe de basculement s'étend perpendiculairement à une droite par laquelle passent les sections de l'attache (16).

13. Système de fixation selon l'une des revendications 10 à 12, **caractérisé en ce que** la section d'arrêt (18) peut être enclenchée dans l'élément porteur (12) à la fin du mouvement de basculement.

14. Système de fixation selon l'une des revendications 10 à 13, **caractérisé en ce que** la section d'arrêt (18) se situe d'un côté de l'axe de basculement, et que l'attache (16) peut être amenée à basculer grâce à l'application d'une charge sur une section située de l'autre côté de l'axe de basculement, notamment réalisée sous forme d'une section de montage (22).

15. Système de fixation selon l'une quelconque des revendications précédentes, **caractérisé en ce que** l'attache (16) est une pièce matricée pliée monobloc.

16. Attache, notamment pour la fixation de composants dans des véhicules automobiles,
comprenant plusieurs sections d'engagement espacées les unes des autres, qui comprennent notamment une section de montage (22) en forme de plateau, une section d'ancrage (20) et une section d'arrêt (18), la section d'arrêt (18) étant constituée par la zone terminale libre d'une section de base en forme de bande se projetant depuis la section de montage à un angle de 90° de préférence, et pourvue, entre la section de montage (22) et la section d'arrêt (18), d'un élargissement de manière à former la section d'ancrage (20).

17. Attache selon la revendication 16, **caractérisée en ce que** des sections inférieures (24) faisant ressort sont conformées sur l'attache (16), sur l'une au moins de ses sections.

18. Attache selon la revendication 17, **caractérisée en ce que** les sections inférieures sont réalisées sous forme de languettes-ressorts (24) se projetant depuis la section de montage (22).

19. Attache selon l'une des revendications 16 et 18, **caractérisée en ce que** la section d'arrêt (18) et la section de montage (22) se situent du même côté d'un plan défini par la section d'ancrage (20).

20. Attache selon l'une des revendications 16 à 19, **caractérisée en ce que** l'attache (16) est une pièce matricée pliée monobloc.
